# EUROPEAN PATENT APPLICATION

(11) **EP 3 994 983 A1**
(43) Date of publication of application: **11.05.2022**
(21) Application number: 21206646.8
(22) Date of filing: 05.11.2021
(51) Int. Cl.: A01M 7/00

(54) **APPARATUS FOR SPRAYING CROPS**

(30) Priority: 09.11.2020 IT 202000026744
(71) Applicant: Martignani Ing. C. Di Martignani Stefano & C. S.r.l., 48020 Sant'Agata Sul Santerno (IT)
(72) Inventor: MARTIGNANI, Stefano, 48022 LUGO (RA) (IT); MARTIGNANI, Claudio, 48022 LUGO (RA) (IT)
(74) Representative: Conti, Marco

(57) **Abstract**

An apparatus (1) for spraying crops with a treating compound, the apparatus being configured to advance along a forward direction (L) in a forward versus (V1) and comprises: a frame (5); a tank (2), configured to contain the treatment compound; a dispenser (3), configured to receive treated air, including the treating compound in nebulized form, and to deliver the treating air in at least one transverse direction (T), perpendicular to the forward direction (L);
a head unit (4), configured to draw air from an inlet port (BA) open to an external environment, connected to the reservoir (2) to receive the treating compound and configured to pump the treating air towards the nozzle (3), said inlet port (BA) being perpendicular to an inlet direction (DA) and receiving air in an inlet versus (VA), entering the inlet port (BA). The head unit (4) includes: a first (LE1) and a second delivery side (LE2), perpendicular to the transverse direction (T) and directly facing outward; a charging unit, configured to electrostatically charge the treated air. The suction inlet (BA) is spaced apart, at least in part, from the first and second dispensing sides (LE1, LE2).

## Description

This invention relates to an apparatus for spraying crops with a treating compound and a method for spraying crops with a treating compound.

In the sector of apparatuses for spraying crops with a treating compound, machines are known which include a tank, in which the treating compound is held. Said apparatuses also include a head unit, which is configured to suck air from the outside, mix it with the treating compound which it receives from the tank and send it to a dispenser of the apparatus. Before being dispensed, the air mixed with the treating compound is charged electrostatically. This electrostatic charge is very important because it makes the treatment extremely efficient, increasing the degree of adhesion of the treating compound to the crops.

The head unit usually comprises impellers, that is to say, centrifugal compressors, which suck air in from a suction side and then compress it towards the dispenser. In particular, the suction side includes an opening which defines a lateral suction inlet, directly facing towards the crops. Moreover, said lateral suction inlets are very close to the ground. However, the prior art machines have a highly inefficient arrangement of the components, for the following reasons. Firstly, the positioning of the suction side is such as to produce a suction of considerable dirt and considerable detritus. Such dirt and such detritus produce a saturation of any filters, if present, producing a maintenance rate which is not sustainable and in any case is not well seen by the user.

Secondly, the arrangement of the components of the machine has an even more serious drawback, with reference to the electrostatic charge of the treatment air.

In fact, the positioning of the current solutions produces a suction of the treatment air just dispensed. For this reason, as well as reducing the treatment air flowing to the crops, the suction of charged air means that the charging operations, performed downstream of the suction, are inefficient and neutralize the charge of the treatment air.

The aim of the invention is to provide an apparatus and a method for spraying crops which overcome the above-mentioned drawbacks of the prior art.

Said aim is fully achieved by the apparatus and the method according to the invention as characterised in the appended claims.

According to an aspect of the invention, the invention provides an apparatus for spraying crops with a treating compound. The apparatus is configured to advance along a forward direction.

The apparatus comprises a frame. The apparatus comprises a tank, configured to contain the treating compound. The apparatus comprises a dispenser. The dispenser is configured to receive treatment air, including the treatment compound in atomised form. The dispenser is configured for dispensing the treatment air at least in a transversal direction, perpendicular to the forward direction.

The apparatus comprises a head unit, configured to suck air from a suction inlet open to an outside environment. The head unit is connected to the tank, to receive the treating compound and mix it with the air, to form treatment air. The head unit is configured to pump the treatment air to the dispenser. The suction inlet is perpendicular to a suction direction. The suction inlet is configured to receive air in a suction direction, entering the suction inlet.

The head unit includes a first and a second dispensing side. The first and/or the second dispensing side are perpendicular to the transversal direction. The first and/or the second dispensing side are directly facing outwards.

The apparatus comprises a charging unit, configured to electrostatically charge the treatment air.

According to an embodiment, the suction inlet is spaced apart, at least in part, from the first and second dispensing sides.

In that way, the air drawn by the suction inlet is far from the zone in which the treatment air is dispensed, so the probability of sucking treatment air is considerably reduced, if not set to zero.

According to an embodiment, the suction direction is inclined with respect to the transversal direction. In this way, the air is presumably sucked from a different zone with respect to the side of the apparatus, thereby avoiding the sucking of charged and dirty air.

According to an embodiment, the suction direction is inclined with respect to the transversal direction on a horizontal plane, including the transversal direction and the forward direction.

According to an embodiment, the suction direction has at least one component opposite the forward direction.

This allows the suction inlet to be oriented in such a way that it sucks from a zone which is positioned, along the forward direction in a forward direction, preferably before the suction unit.

According to an embodiment, the suction direction is inclined with respect to the transversal direction in a vertical plane, perpendicular to the forward direction. According to this embodiment, the head unit may suck from a raised zone with respect to the apparatus.

According to an embodiment, the suction direction is inclined with respect to the transversal direction by a predetermined angle of between 30° and 150°.

Preferably, the predetermined angle is between 80° and 100°.

According to an embodiment, the suction inlet is spaced, along the forward direction, with respect to the head unit.

This solution is even higher performing since the suction is located in different positions, reducing even more the probability that there are the above-mentioned drawbacks.

According to an embodiment, the head unit comprises a compressor unit, including a first compressor with a respective access.

The head unit comprises a conveyor conduit. The conveyor conduit extends from a first end, connected to the access of the compressor unit, and a second end, which defines the suction inlet.

According to an embodiment, the conveyor conduit is elongate along the forward direction. The conveyor conduit is arranged, along a vertical direction, perpendicular to the forward direction and the transverse direction, above the tank. This solution offers the greatest advantages, spacing the suction from the first and second dispensing sides both along the forward direction (with a consequent reduction in the risk of sucking charged air) and along the vertical direction (with a consequent reduction in the risk of sucking dirt deposited on the ground).

According to an embodiment, the compressor unit comprises a second compressor with a respective access.

The head unit comprises a diverter conduit, connected to the access of the first compressor and to the access of the second compressor. The diverter conduit is connected to the first end of the conveyor conduit. In this way, the diverter conduit is able to divide and convey the air between the first and the second compressor.

The conveyor conduit is arranged, along a vertical direction, perpendicular to the forward direction and the transversal direction, above the tank.

According to an embodiment of the invention, the head unit comprises an additional suction inlet. The additional suction inlet is spaced from the first and/or from the second dispensing side along the transversal direction. The additional suction inlet faces the inlet port. The additional suction inlet defines a corresponding additional suction direction. The suction inlet and the additional suction inlet are spaced from the first and the second dispensing sides, along the transversal direction. According to an embodiment, the suction direction and the additional suction direction coincide with the transversal direction.

According to an embodiment, the suction inlet and/or the additional suction inlet are positioned, along the vertical direction, at a height at least equal to 20 cm, preferably at least 40 cm.

According to an embodiment, the suction inlet and the additional suction inlet are spaced from the first and second dispensing sides by at least 15 cm, preferably 30 cm.

According to an aspect of the invention, the invention provides a method for spraying crops with a treating compound, using a crop spraying apparatus moving along a forward direction in a forward versus.

The method comprises a step of storing a treating compound in a tank. The method comprises a step of mixing air with the treating compound, for defining treatment air. The method comprises a step of pumping treatment air, using the head unit, to a dispenser.

The method comprises a step of dispensing of the treating air to the crops in at least one transverse direction, perpendicular to the forward direction. According to an embodiment, the dispenser includes a first and a second dispensing side, perpendicular to the transversal direction and facing directly towards the sprayed crops.

The method comprises a step of sucking air through a suction inlet of the head unit, which is perpendicular to a suction direction and faces a suction direction, entering the suction inlet.

The method comprises a step of electrostatic charging of the treatment air using a charging unit.

According to an embodiment of the method, in the suction step, the suction inlet is spaced, at least partly, from the first and second dispensing sides.

These and other features will become more apparent from the following detailed description of a preferred embodiment, illustrated by way of nonlimiting example in the accompanying drawings, in which:

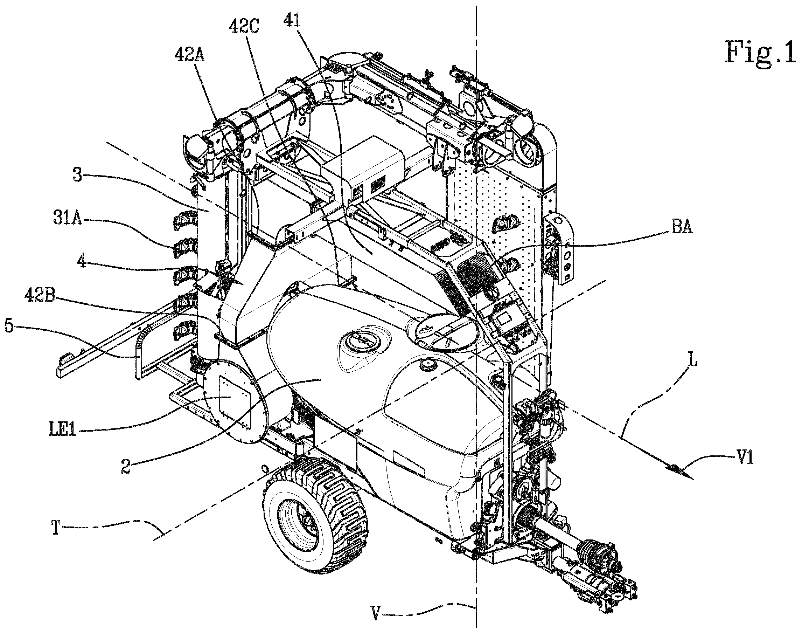

- Figure 1 is a perspective view of an embodiment of an apparatus for spraying crops according to the invention;

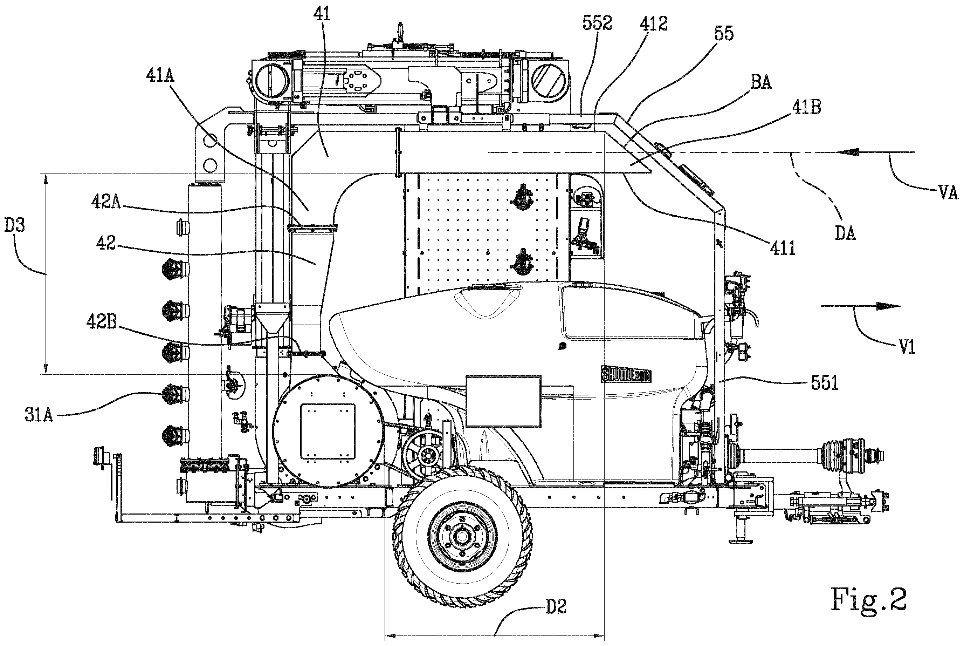

- Figure 2 is a side view of the apparatus shown in Figure 1;

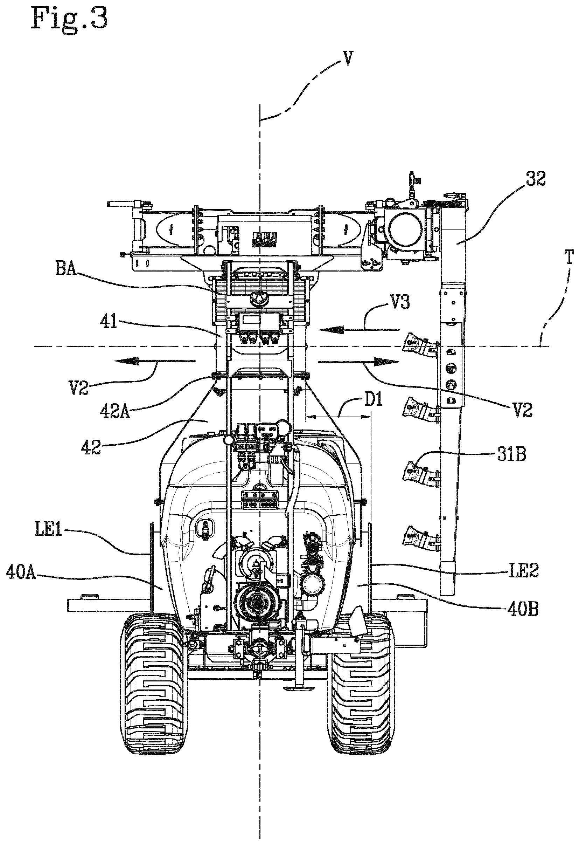

- Figure 3 is a front view of the apparatus shown in Figure 1;

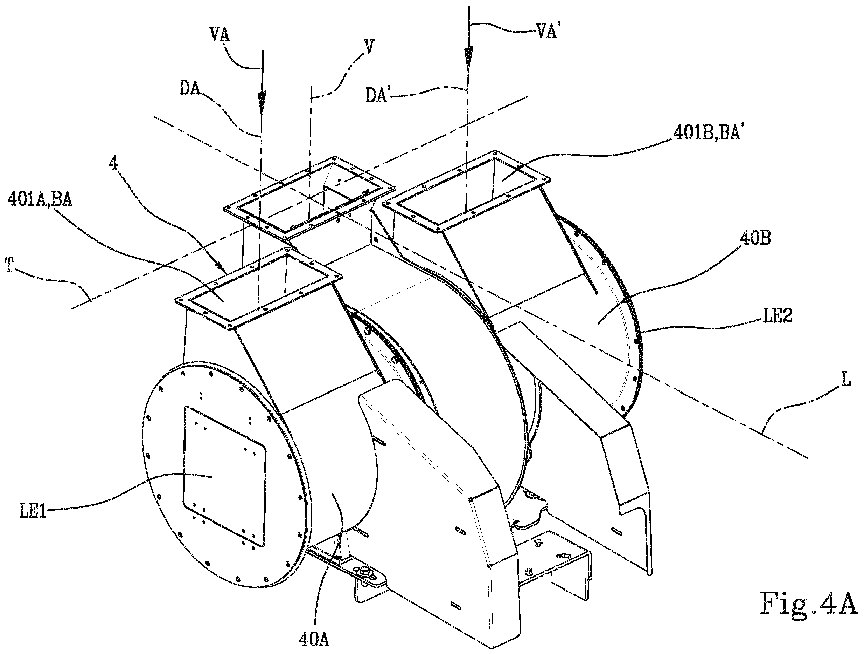

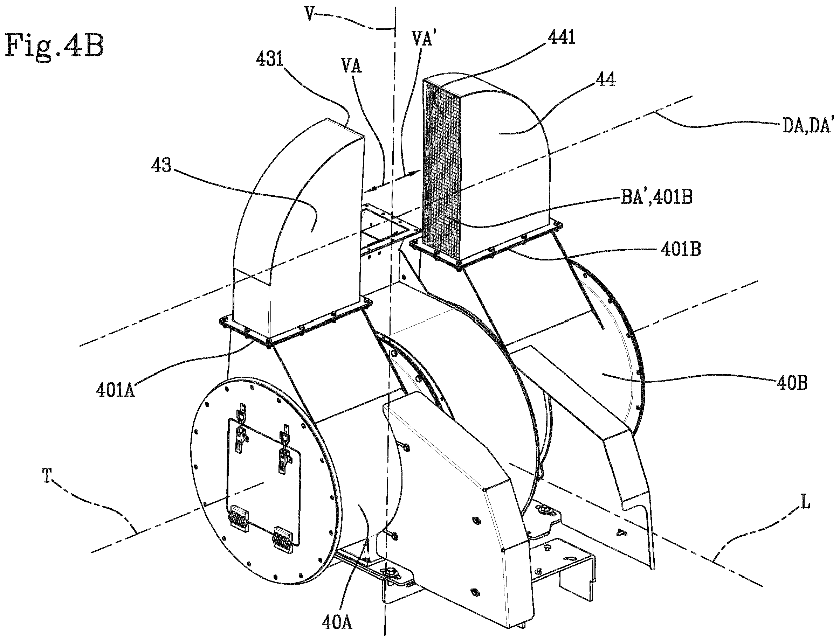

- Figures 4A and 4B illustrate a second embodiment and a third embodiment of the apparatus shown in Figure 1;

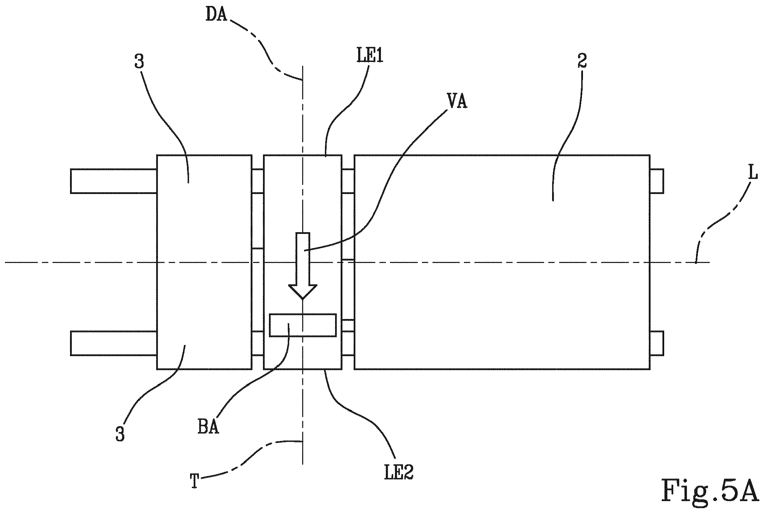

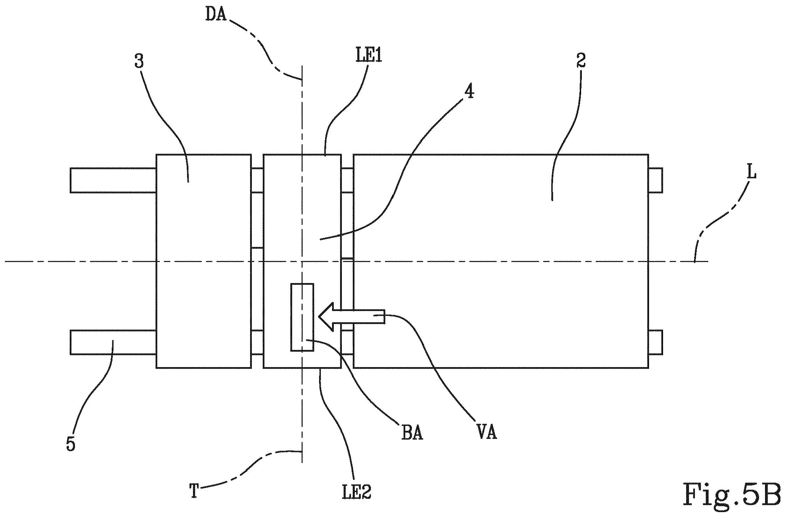

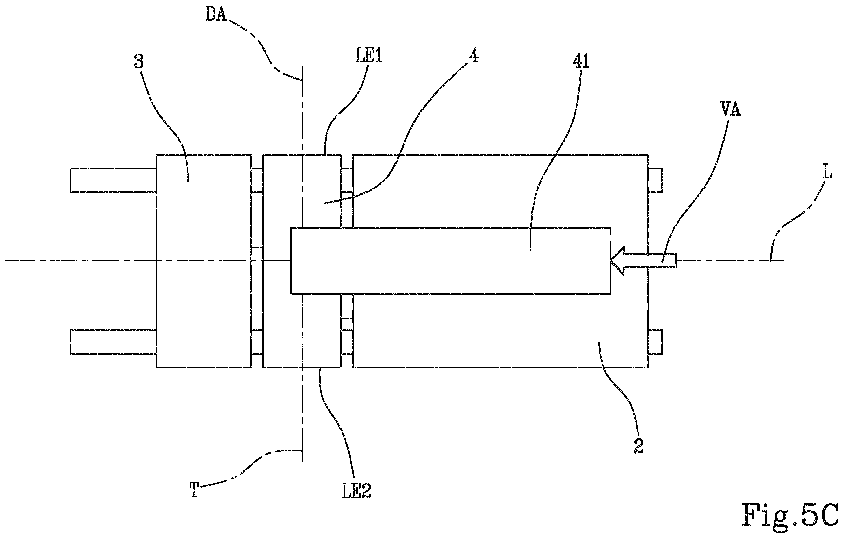

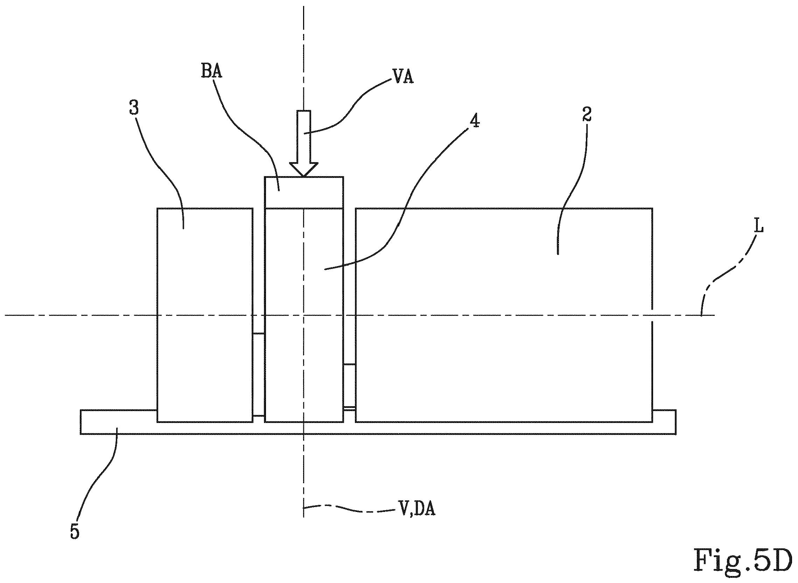

- Figures 5A, 5B, 5C and 5D schematically illustrate various embodiments of the apparatus shown in Figure 1.

With reference to the accompanying drawings, the numeral 1 denotes an apparatus for spraying crops with treating compound.

The apparatus 1 is configured to advance along a forward direction L in a forward versus V1.

The apparatus 1 comprises a tank 2, for containing and storing the treating compound. The apparatus 1 comprises a dispenser 3, for dispensing treatment air, in which particles of treating compound are nebulised. According to an embodiment, the apparatus 2 comprises a head unit 4, configured to draw air from the outside, mix it with the treating compound and send it to the dispenser 3 for dispensing the treatment air.

The apparatus 1 comprises a frame 5 configured to support the components of the apparatus 1 as the apparatus itself advances.

In particular, the frame 5 comprises a front portion 51. The frame 5 comprises a rear portion 52, connected to the front portion 51 and located upstream of the front portion 51, along the forward direction L in the forward versus V1.

The frame 5 comprises at least one pair of rolling elements 53, for example rubberized or tracked wheels. The pair of rolling elements 53 is connected to the front portion 51 of the frame 5.

The head unit 4 is interposed, along the forward direction L, between the tank 2 and the dispenser 3. The frame 5 also comprises a power take-off 54, connected to a motor of a tractor for receiving a drive torque.

The power take-off 54 is connected to the head unit 4 in order to transfer the drive torque and allow a suction and compression of the air.

In particular, the head unit 4 includes at least one head element 40 configured to provide head to the air, for example a centrifugal or volumetric compressor. The apparatus 1 comprises a transmission unit 6 which transmits the motion of the power take-off 54 to the head element of the head unit 4.

The transmission unit 6 is preferably positioned in a housing defined by a cavity of the tank 2. In other words, the tank 2 is aligned, along a vertical direction V, parallel to the direction of the weight force, with the transmission unit 6. This increases the compactness of the apparatus. The apparatus 1 according to the invention may have different dispensing configurations. In particular, according to an embodiment, the dispenser 3 comprises a plurality of nozzles 31, configured for dispensing the treatment air towards the crops. According to an embodiment, the dispenser 3 comprises a second group of nozzles 31B of said plurality 31. The first group of nozzles 31A is configured for dispensing treatment air along a transversal direction T, perpendicular to the forward direction L and to the vertical direction V, in an outward direction V2, oriented with respect the apparatus towards the outside. The second group of nozzles 31B is configured for dispensing treatment air along the transversal direction T in an entering direction V3, oriented towards the outside of the apparatus 1.

According to the embodiment wherein the second group of nozzles 31B is present, the dispenser 3 comprises a dispensing flap 32, which rotates about an axis of rotation between a closed position, in which it is close to the apparatus 1, and an open position, wherein it is spaced from the frame 5, for dispensing treatment air on the row of a crop, in particular on the side opposite to that facing the frame 5 of the apparatus 1.

According to an embodiment, the head unit 4 comprises a first head element 40A and a second head element 40B. The first and the second head elements 40A and 40B receive air, mix it with the treating compound and convey it towards the dispenser 3 to be dispensed.

According to a preferred embodiment, the first head element is a first compressor 40A (preferably a centrifugal compressor). According to a preferred embodiment, the second head element is a second compressor 40B (preferably a centrifugal compressor). Said first and second centrifugal compressors 40A, 40B face respective sides of the apparatus 1 which are perpendicular to the transversal direction T, that is to say, they are spaced along the transversal direction T. In particular, the surface of the first compressor 40A facing towards the outside defines a first dispensing side LE1. Moreover, the surface of the second compressor 40B facing towards the outside defines a second dispensing side LE2, opposite the first dispensing side LE1.

Each of said first and second compressor units 40A, 40B include a respective compression chamber, in which the air compression actually occurs. The first dispensing side LE1 is free of openings (it is closed with respect to the compression chamber of the first compressor 40A), that is to say, there is no passage of air from a zone facing the first dispensing side LE1 and the compression chamber of the first compressor 40A.

The second dispensing side LE2 is free of openings (it is closed with respect to the compression chamber of the second compressor 40B), that is to say, there is no passage of air from a zone facing the second dispensing side LE2 and the compression chamber of the second compressor 40B.

The head unit 4 comprises a suction inlet BA. The suction inlet BA is configured to receive a flow of air entering along a suction direction DA in a suction direction VA entering the suction inlet BA. According to an embodiment, the inlet opening BA is spaced with respect to the first dispensing side LE1 and/or from the second dispensing side LE2. For example, the suction inlet is spaced, along the transversal direction T, with respect to the first dispensing side LE1 and/or from the second dispensing side LE2, by a first distance D1. In addition or alternatively, the suction inlet is spaced, along the forward direction L, with respect to the first dispensing side LE1 and/or from the second dispensing side LE2 by a second distance D2. In addition or alternatively, the suction inlet is spaced, along the vertical direction V, with respect to the first dispensing side LE1 and/or from the second dispensing side LE2 by a third distance D3. In a particularly advantageous embodiment, the suction inlet BA is spaced simultaneously in all three directions L, T and V.

According to an embodiment, the suction direction DA is rotated by a first angle with respect to the transversal direction T, in a horizontal plane defined by the forward direction L and the transversal direction T. According to an embodiment, the suction direction DA is rotated by a second angle with respect to the transversal direction T, in a vertical plane defined by the vertical direction V and by the transversal direction T. According to an embodiment, the suction direction DA is inclined simultaneously by the first angle and by the second angle with respect to the transversal direction T.

According to an embodiment, the suction direction VA includes at least one component concordant with the direction of the weight force. According to an embodiment, the suction direction VA includes at least one component opposite the forward versus V1.

According to an embodiment, the head unit 4 includes an additional suction inlet BA', corresponding to a respective additional suction direction DA' and an additional suction direction VA'. According to this embodiment, the suction inlet BA is configured to receive a flow of air to be compressed in the first compressor 40A, whilst the additional suction inlet BA' is configured to receive a flow of air to be compressed in the second compressor 40B.

According to an embodiment, the first compressor 40A comprises a respective access 401A. According to an embodiment, the second compressor 40B comprises a respective access 401B. According to an embodiment, the access 401A of the first compressor defines the suction intake BA, whilst the access 401B of the second compressor 40B defines the additional suction inlet BA'. According to this embodiment, the suction inlet BA and the additional suction inlet BA' are perpendicular to the vertical direction V, in particular, they are rotated by 90° with respect to the transversal direction T in the vertical plane. The suction direction DA and the additional suction direction DA' are parallel to each other. The direction of suction VA and the additional direction of suction VA' are directed in the same direction as the weight force.

According to a further embodiment, the additional suction inlet BA' and the suction inlet BA are perpendicular to the transversal direction T and facing each other. In particular, the suction inlet BA faces towards the second dispensing side LE2 while the additional suction inlet BA' faces the first dispensing side LE1. The suction direction VA and the additional suction direction VA' are opposite to each other and both oriented towards the outside of the apparatus (that is, concordant with the direction V2). According to this embodiment, the head unit 4 comprises a first curved conduit 43 and a second curved conduit 44. The first curved conduit 43 is connected with the access 401A of the first compressor 40A. The first curved conduit 43 varies the suction direction DA by a right angle, leading it to be parallel to the transversal direction T. The second curved conduit 44 is connected with the access 401B of the second compressor 40B. The second curved conduit 44 varies the additional suction direction DA' by a right angle, bringing it to be parallel to the transversal direction T. According to an embodiment, the first curved conduit 43 comprises a first grille 431, having a shape corresponding to that of the suction inlet BA and positioned on the suction inlet BA in order to block the inflow of objects which could damage the first compressor 40A.

According to an embodiment, the second curved conduit 44 comprises a second grille 441, having a shape corresponding to that of the additional suction inlet BA' and positioned on the additional suction inlet BA' to block the inflow of objects which could damage the second compressor 40B. According to a further embodiment, the head unit 4 comprises a conveyor conduit 41 extending between a first end 41A and a second end 41B. Preferably, the head unit 4 comprises a diverter conduit 42.

The diverter conduit 42 has a Y shape. The diverter conduit 42 includes a first end, in which there is a single opening 42A, and a second end, which is divided into a first connection 42B and into a second connection 42C. The first connection 42B is connected to the access 401A of the first compressor 40A. The second connection 42C is connected to the access 401B of the second compressor 40B.

The single opening 42A is connected with the first end 41A of the conveyor conduit 41. The second end 41B of the conveyor conduit 41 defines the suction inlet BA. According to an embodiment, the conveyor conduit 41 is positioned, along the vertical direction V, above the tank 2. Moreover, the conveyor conduit 41 is preferably aligned, along the vertical direction V, with the tank 2. The diverter conduit 42 is positioned, along the vertical direction V, above the first and the second compressor 40A, 40B. According to an embodiment, the second end 41B of the conveyor conduit is cut in a plane which is inclined with respect to a vertical plane. In particular, the conveyor conduit 41 comprises a lower wall 411 and an upper wall 412. The lower wall 411 is moved forward with respect to the upper wall 412 along the forward direction L in the forward versus V1. According to an embodiment, the conveyor conduit 41 is spaced, along the transversal direction T, from the first dispensing side LE1 and the second dispensing side LE2. Moreover, according to other embodiments, the second end 41B of the conveyor conduit 41 includes a curve, which varies the suction direction DA with respect to the direction of maximum extension of the conveyor conduit 41, parallel to the forward direction L. According to this embodiment, the curve of the conveyor conduit determines a forward direction which includes at least one component along the vertical direction V.

According to an embodiment, the suction inlet BA defined by the second end 41B of the conveyor conduit 41 is located, along the forward direction L in the forward versus V1, in an advanced position with respect to the tank 2. According to other embodiments, the suction inlet BA defined by the second end 41B of the conveyor conduit 41 is located, along the forward direction L in the forward versus V1, in a withdrawn position with respect to the tank 2.

According to an embodiment, the frame 5 comprises an intervention arc 55, which comprises a vertical portion 551 and a horizontal portion 552, which is positioned above the conveyor conduit 41 along the vertical direction V.

According to an embodiment, the head unit 4 comprises a filter, located downstream of the suction inlet BA, in the suction direction VA to prevent dirt from being dispensed. According to an embodiment, the head unit 4 comprises an additional filter located downstream of the additional suction inlet BA', in the additional suction direction VA', to prevent dirt from being dispensed.

According to an embodiment, the apparatus 1 comprises a charging unit, configured to intercept the treatment air along an operating path of the air from the suction inlet BA to the plurality of nozzles 31 of the dispenser 3, in such a way as to electrostatically charge the particles of treating compound nebulised in the treatment air.

## Claims

1. Apparatus (1) for spraying crops with a treating compound, the apparatus being configured to advance along a forward direction (L) in a forward versus (V1) and comprising:
- a frame (5);
- a tank (2), configured to contain the treatment compound;
- a dispenser (3), configured to receive treated air, including the treating compound in nebulized form, and to deliver the treating air in at least one transverse direction (T), perpendicular to the forward direction (L);
- a head unit (4), configured to draw air from an inlet port (BA) open to an external environment, connected to the reservoir (2) to receive the treating compound and mix it with air, to define treating air, and configured to pump the treating air towards the nozzle (3), said inlet port (BA) being perpendicular to an inlet direction (DA) and receiving air in an inlet versus (VA), entering the inlet port (BA),
wherein the head assembly (4) includes a first (LE1) and a second delivery side (LE2), perpendicular to the transverse direction (T) and directly facing outward;
- a charging unit, configured to electrostatically charge the treated air; **characterized in that** the suction inlet (BA) is spaced apart, at least in part, from the first and second dispensing sides (LE1, LE2).

2. Apparatus (1) according to claim 1, wherein the suction direction (DA) is inclined with respect to the transverse direction (T).

3. Apparatus (1) according to claim 2, wherein the suction direction (DA) is inclined relative to the transverse direction (T) in a horizontal plane including the transverse direction (T) and the forward direction (L).

4. Apparatus (1) according to claim 3, wherein the suction versus (VA) has at least one component opposite the forward versus (V1).

5. Apparatus (1) according to any one of the preceding claims, wherein the suction direction (DA) is inclined with respect to the transverse direction (T) in a vertical plane, perpendicular to the forward direction (L).

6. Apparatus (1) according to any one of the preceding claims, wherein the suction direction (DA) is inclined relative to the transverse direction (T) by a predetermined angle between 30° and 150°.

7. Apparatus (1) according to claim 6, wherein the predetermined angle is between 80° and 100°.

8. Apparatus (1) according to any one of the preceding claims, wherein the inlet port (BA) is spaced apart, along the forward direction (L), from the head assembly (4).

9. Apparatus (1) according to any one of the preceding claims, wherein the head group (4) comprises:
- a compressor assembly, including a first compressor (40A) and a corresponding access (401 A);
- a conveyor duct (41), developing from a first end (41A), defining an intake port (BA), and a second end (41B), connected to an access of the compressor assembly to convey air.

10. Apparatus (1) according to claim 9, wherein the conveyor conduit (41) is elongated along the forward direction (L) and is arranged, along a vertical direction (V), perpendicular to the forward direction (L) and the transverse direction (T), above the tank (2).

11. Apparatus (1) according to claim 9 or 10, wherein the compressor comprises a second compressor (40B) and a respective access (401B), and wherein the head assembly (4) comprises a diverter conduit (42), connected to the access (401A) of the first compressor (40A), the access (401B) of the second compressor (40B), and the first end (41A) of the conveyor duct (41), for dividing and conveying air in the first and second compressors (40°, 40B)

12. Apparatus according to any one of the preceding claims, wherein the inlet port (BA) is arranged, along a vertical direction (V), perpendicular to the forward direction (L) and the transverse direction (T), above the tank (2).

13. Apparatus according to any one of the preceding claims, wherein the head assembly (4) comprises an additional suction port, spaced from the first and second dispensing sides (LE1, LE2) along the transverse direction (T), facing the suction port (BA) and defining a corresponding additional suction direction, wherein the suction inlet (BA) and the additional suction inlet are spaced from the first and second dispensing sides (LE1, LE2) along the transverse direction (T), and wherein the suction direction (DA) and the additional suction direction coincide with the transverse direction (T).

14. A method for spraying crops with a treating compound, by means of an apparatus for spraying crops advancing along an forward direction (L) in a forward versus, the method comprising the following steps:
- storage of a treating compound in a tank (2);
- mixing of air with the treating compound, to define treating air;
- pumping of the treating air, via a head unit (4), to a dispenser (3);
- delivery of the treating air to the crops in at least one transverse direction (T), perpendicular to the forward direction (L),
- wherein the dispenser (3) includes a first and second dispensing sides (LE1, LE2), perpendicular to the transverse direction (T) and facing directly toward the sprayed crops;
- suction of air through a suction inlet (BA) of the head assembly (4), which is perpendicular to a suction direction (DA) and faces a suction versus (VA), entering the suction inlet (BA);
- electrostatic charging of the treatment air by means of a charging unit, **characterised in that** during the suction step the suction inlet (BA) is spaced apart, at least in part, from the first and second dispensing sides (LE1, LE2).
